# EUROPÄISCHE PATENTANMELDUNG

(11) **EP 1 918 170 A1**
(43) Veröffentlichungstag der Anmeldung: **07.05.2008**
(21) Anmeldenummer: 07015569.2
(22) Anmeldetag: 08.08.2007
(51) Int. Cl.: B60T 17/08

(54) **Druckluft-Bremszylinder**

(30) Priorität: 31.10.2006 DE 102006051268
(71) Anmelder: WABCO STANDARD GmbH, 30453 Hannover (DE)
(72) Erfinder: Brandt, Oliver, 38120 Braunschweig (DE); Ewald, Jürgen, 30880 Laatzen (DE); Richter, Andreas, 30900 Wedemark (DE); Schrader, Frank, 30916 Isernhagen (DE)

(57) **Zusammenfassung**

Es wird ein Druckluft-Bremszylinder, insbesondere zur Betätigung von Kfz-Scheibenbremsen, vorgeschlagen. Dieser enthält einen Kolben, bestehend aus einer Kolbenscheibe (4) und einer Kolbenstange (5). Zur Einsparung von Material sowie zur Reduzierung von Toleranzen ist der Kolben einstückig durch Kaltumformung eines Ausgangsmaterials hergestellt.

## Beschreibung

Die Erfindung bezieht sich auf einen Druckluft-Bremszylinder gemäß dem Oberbegriff des Patentanspruchs 1.

Ein derartiger Bremszylinder ist beispielsweise aus der DE 102 44 916 B4 bekannt. Es handelt sich um einen Federspeicherbremszylinder mit einem federbetätigten hinteren Kolben und einem druckluftbetätigten vorderen Kolben. Dabei besteht der vordere Kolben aus einer Druckplatte und einer daran befestigten Betätigungsstange. Die Druckplatte stützt sich auf einer Gummimembran ab. Zur Betätigung des vorderen Kolbens wird ein zwischen Gummimembran und Gehäusewand befindlicher Druckraum belüftet. Die Verbindung zwischen Betätigungsstange und Druckplatte ist im allgemeinen geschweißt, beispielsweise durch Reibschweißung.

Bei einem derartigen Aufschweißen ist jedoch die Zentrierung der Betätigungsstange kritisch. Außerdem ist die Einhaltung bestimmter Längentoleranzen schwierig.

Der Erfindung liegt deshalb die Aufgabe zugrunde, einen aus einer Kolbenscheibe und einer Kolbenstange bestehenden Kolben eines Druckluftbremszylinders so zu verbinden, dass die bekannten Nachteile vermieden werden.

Diese Aufgabe wird durch die im Patentanspruch 1 enthaltene Erfindung gelöst. Die Unteransprüche enthalten zweckmäßige Weiterbildungen.

Die Erfindung wird im Folgenden anhand einer Zeichnung näher erläutert. Diese zeigt in
- Fig. 1: einen Bremszylinder gemäß dem Stand der Technik;
- Fig. 2: einen Bremszylinder gemäß der Erfindung mit einstückig hergestelltem Kolben;
- Fig. 3: einen Bremszylinder mit einem Kolben, dessen Kolbenstange am Ende ein separates Druckstück aufweist;
- Fig. 4: einen Bremszylinder mit einem Kolben gemäß Fig. 2, der jedoch voll ausgefahren ist;
- Fig. 5: ebenfalls einen Bremszylinder mit voll ausgefahrenem Kolben, jedoch mit einer Fase an der Kolbenscheibe;
- Fig. 6: den Bremszylinder mit Kolben gemäß Fig. 5 im eingefahrenen Zustand.

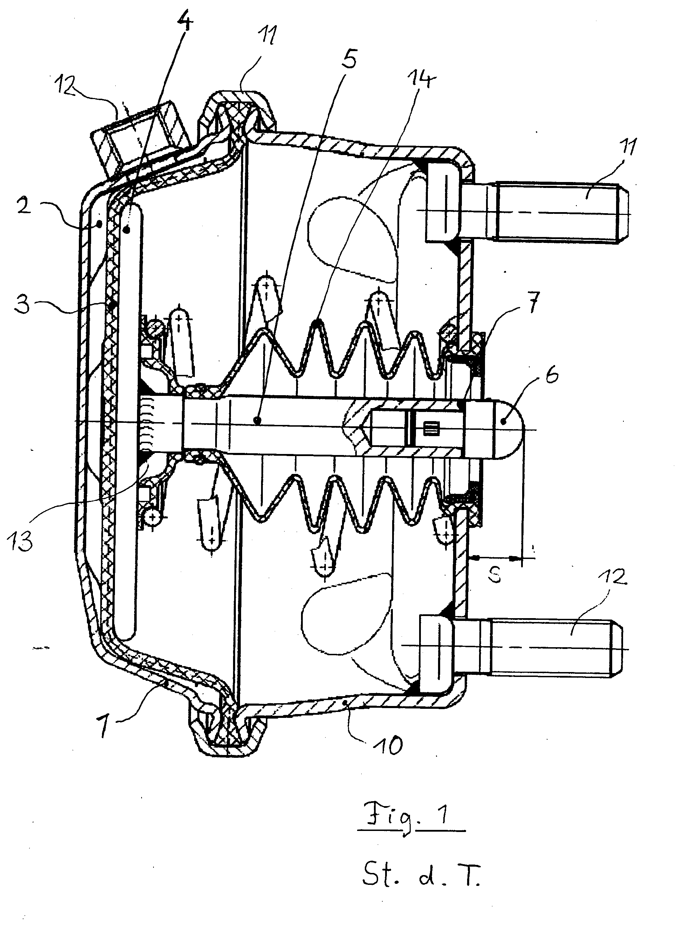

In Fig. 1 ist ein Druckluft-Bremszylinder, insbesondere zur Betätigung von Kfz-Scheibenbremsen, nach dem Stand der Technik dargestellt. Er besteht aus zwei Gehäuseschalen (1, 10), die durch eine Bördelung (11) zusammengehalten werden. Das Gehäuse (1, 10) lässt sich mittels Befestigungsbolzen (11, 12) an geeigneter Stelle des Kraftfahrzeuges befestigen. Der dargestellte Bremszylinder enthält weiter einen Kolben, welcher aus einer Kolbenscheibe (4) und einer Kolbenstange (5) besteht. Am rechten Ende der Kolbenstange (5) ist ein separates Druckstück (6) eingesetzt, welches mittels Ausgleichscheiben (7) längsverstellbar ist. Hierdurch können Toleranzen der Länge der Kolbenstange (5) ausgeglichen werden.

Der Bremszylinder enthält weiter eine Gummi-Membran (3), auf welcher sich die Kolbenscheibe (4) abstützt.

Die Fig. 1 zeigt den Kolben (4, 5) im eingefahrenen Zustand. Zur Betätigung des Kolbens wird über einen Druckluftanschluss (12) eine Belüftungskammer (2) mit Druckluft beaufschlagt. Hierdurch bewegt sich der Kolben (4, 5) nach rechts.

Zur Verbindung der Kolbenscheibe (4) mit der Kolbenstange (5) dient eine Schweißnaht (13). Diese ist im allgemeinen durch einen Reibschweiß-Vorgang hergestellt.

Zur Abdichtung des Innenraums der Gehäuseschale (10) gegenüber dem Eindringen von Staub aus der Umgebung dient ein Faltenbalg (14). Im gezeichneten eingefahrenen Zustand des Kolbens hat der Endpunkt des Druckstücks (6) gegenüber dem Gehäuseschale (10) ein Einstellmaß s.

Wie aus der Fig. 1 ersichtlich ist, besteht der aus dem Stand der Technik bekannte Kolben aus mindestens vier Bauteilen, nämlich der Kolbenscheibe (4), der Kolbenstange (5), den Ausgleichsscheiben (7) und dem Druckstück (6). Dabei dienen die Ausgleichsscheiben (7), wie oben erläutert, zum Einstellen des korrekten Einstellmaßes s.

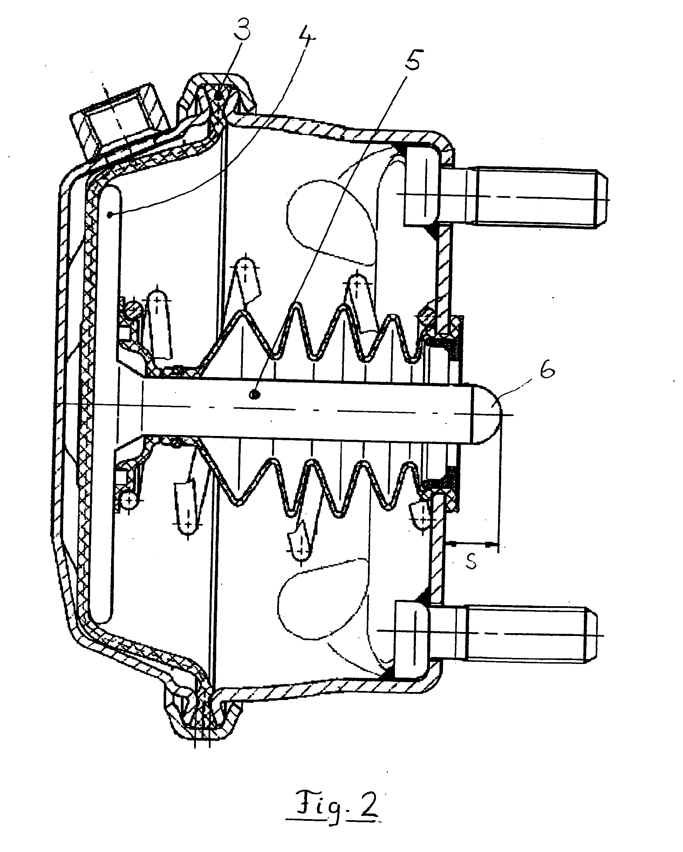

In der Fig. 2 ist ein Bremszylinder gemäß der Erfindung dargestellt, welcher nur noch einen einstückigen Kolben aufweist. Dieser ist mitsamt Kolbenscheibe (4), Kolbenstange (5) sowie Druckstück (6) durch eine Kaltumformung (Taumeln) eines geeigneten Ausgangsmaterials, z.B. Aluminium, einstückig hergestellt. Die erfindungsgemäße einstückige Herstellung hat insbesondere den Vorteil, dass nur noch eine Bauteiltoleranz auftritt. Die Genauigkeit eines gewünschten Einstellmaßes s hängt also jetzt nicht mehr von den Einzelgenauigkeiten von Kolbenscheibe (4), Kolbenstange (5) sowie Druckstück (6) ab, sondern lediglich von der Herstellungsgenauigkeit des Pressvorganges. Durch die erfindungsgemäße Kaltumformung des Ausgangsmaterials wird weiter vorteilhaft eine Verfestigung des verwendeten Materials erzielt, wodurch der Kolben belastbarer wird. Dies gilt insbesondere für die Verbindungsstelle zwischen Kolbenstange (5) und Kolbenscheibe (4). Falls die erwähnte erhöhte Belastbarkeit nicht notwendig ist, kann durch eine verringerte Materialstärke von Kolbenscheibe (4) und Kolbenstange (5) Material eingespart werden.

Weiterhin ergibt sich der Vorteil einer vereinfachten Fertigung, da gegenüber dem Stand der Technik Fertigungsvorgänge, insbesondere eine Verschweißung von Kolbenscheibe (4) mit der Kolbenstange (5), entfallen. Weiter wirkt sich die Bauteilreduzierung, insbesondere bei dem hier vorliegenden Massenbauteil, günstig auf die Fertigungskosten aus.

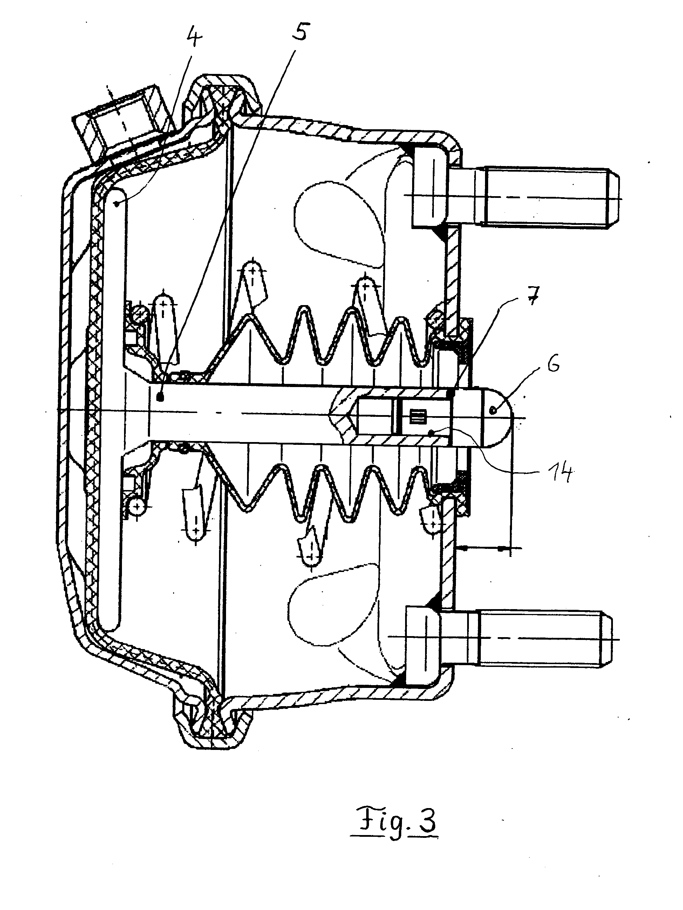

In der Fig. 3 ist ein Bremszylinder mit einer Kolbenstange wie in der Fig. 2 dargestellt, wobei jedoch wie beim Stand der Technik (Fig. 1) die Kolbenstange (5) durch ein eingesetztes Druckstück (6) sowie Ausgleichsscheiben (7) ergänzt ist. Eine Bohrung (14) kann in die Kolbenstange (5) beim Herstellungsvorgang mit eingepresst werden. Hierdurch ist ein nachträglicher Toleranzausgleich möglich.

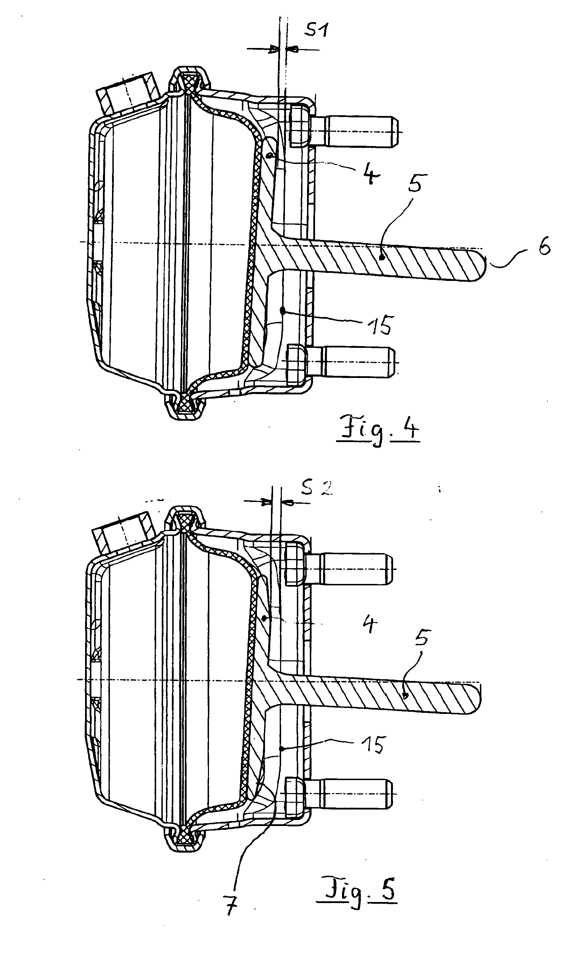

Die Fig. 4 zeigt den Bremszylinder gemäß Fig. 2 im ausgefahrenen Zustand. Dabei stützt sich das Druckstück (6) auf einem Bremshebel (nicht dargestellt) ab. Der Bremshebel macht eine kreisförmige Bewegung, wodurch der Kolben (4, 5) in der ausgefahrenen Stellung schräg ausgelenkt ist. In dieser ausgefahrenen Stellung ergibt sich ein minimaler Abstand zwischen dem Rand der Kolbenscheibe (4) und einem Kolbenanschlag (15) von der Größe s1.

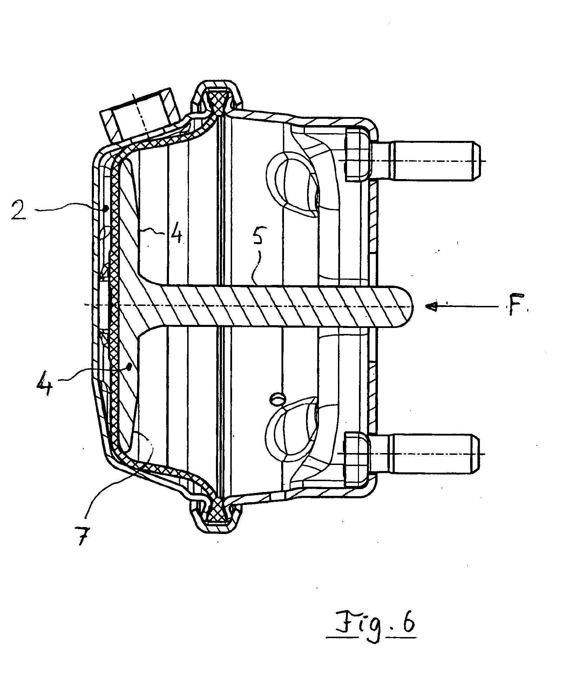

In der Fig. 5 ist derselbe Bremszylinder wie in der Fig. 4 dargestellt, hier jedoch mit einer Kolbenscheibe (4), an welche beim Umformungs-Vorgang eine Fase (7) angeformt ist. Hierdurch ergibt sich in der gezeichneten ausgefahrenen Stellung ein Abstand zwischen dem Oberrand der Kolbenscheibe (4) und dem Kolbenanschlag (15) von s2, wobei s2 größer als s1 ist. Durch die Ausbildung der Kolbenscheibe mit Fase gemäß Fig. 5 ergibt sich somit eine Hubverlängerung des Kolbens der Größe s2 minus s1. Eine derartige Hubverlängerung ist deshalb wichtig, da der zur Verfügung stehende Einbauraum in der Nähe der Radbremse beschränkt ist, und somit ein bauraummäßig kleinerer Bremszylinder möglich ist.

In der Fig. 6 ist der Bremszylinder der Fig. 5, also mit einer Kolbenscheibe (4) mit angeformter Fase (7), im eingefahrenen Zustand dargestellt. Sofern die Belüftungskammer (2) mit Druckluft beaufschlagt ist, wirkt auf Kolbenstange (5) sowie Kolbenscheibe (4) eine Kraft F von erheblicher Größe. Die Fase (7) am Rand der Kolbenscheibe (4) bewirkt hier eine vorteilhafte Vergleichmäßigung der Biegespannungen in der Kolbenscheibe (4) im Vergleich zur Ausführung nach der Fig. 2, wo die Kolbenscheibe (4) keine Fase aufweist. Durch die Vergleichmäßigung der Biegespannung ist eine Materialeinsparung am Rande der Kolbenstange (4) möglich. Dieser Vorteil ergibt sich zusätzlich zur oben beschriebenen Hubverlängerung.

## Patentansprüche

1. Druckluft-Bremszylinder, insbesondere zur Betätigung von Kfz-Scheibenbremsen, mit einer Belüftungskammer (2), einer Membran (3) und mit einem Kolben, bestehend aus einer Kolbenscheibe (4) und einer Kolbenstange (5), **dadurch gekennzeichnet, dass** der Kolben mit Kolbenscheibe (4) und Kolbenstange (5) einstückig durch Kaltumformung eines Ausgangsmaterials hergestellt ist.

2. Druckluft-Bremszylinder nach Anspruch 1, **dadurch gekennzeichnet dass** in die Kolbenstange (5) ein Druckstück (6) zur Betätigung eines Bremshebels einer Scheibenbremse integriert ist.

3. Druckluft-Bremszylinder nach Anspruch 1 bis 2, **dadurch gekennzeichnet, dass** am Außenrand der Kolbenscheibe (4) eine Fase (7) integriert ist.
